# EUROPEAN PATENT APPLICATION

(11) **EP 3 081 395 A1**
(43) Date of publication of application: **19.10.2016**
(21) Application number: 16159973.3
(22) Date of filing: 11.03.2016
(51) Int. Cl.: B60C 9/00, B60C 9/26, D07B 1/06

(54) **A CONTINUOUS CROWN REINFORCEMENT FOR A PNEUMATIC TIRE**

(30) Priority: 31.03.2015 US 201514674303
(71) Applicant: The Goodyear Tire & Rubber Company, Akron, Ohio 44316 (US)
(72) Inventor: LIONETTI, Robert Edward, 7227 Bereldange (LU); FOSAM, Richard, 7462 Moesdorf (LU); EULER, Erik Simon Marcel, 9170 Sint-Gillis-Waas (BE); LESCAUD, Olivier, 6600 Bastogne (BE)
(74) Representative: Kutsch, Bernd

(57) **Abstract**

A pneumatic tire comprising a carcass (22) reinforced by one or more carcass plies (14) extending from a first bead to a second bead (20a, 20b) and a single reinforcement (301) disposed radially outward of the one or more carcass plies (14) in a crown portion of the pneumatic tire (10) is disclosed. The single reinforcement (301) comprises a continuous cord forming a generally zigzag pattern across the width of the crown portion, the continuous cord being part of a continuous strip with a width in a range of from 3.0 mm to 30.0 mm.

## Description

### Field of the Invention

The present invention relates to a pneumatic tire, and more particularly, to a belt construction for a pneumatic tire.

### Background of the Invention

A pneumatic tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber is located axially and radially outward, respectively, of the carcass ply. A belt structure is disposed radially between the carcass ply and tread rubber.

The bead area is one part of the tire that contributes a substantial amount to the rolling resistance of the tire, due to cyclical flexure which also leads to heat buildup. Under conditions of severe operation, as with runflat and high performance tires, the flexure and heating in the bead region can be especially problematic, leading to separation of mutually adjacent components that have disparate properties, such as the respective moduli of elasticity. In particular, the ply turnup ends may be prone to separation from adjacent structural elements of the tire.

A conventional ply may be reinforced with materials such as polyamide/nylon, polyester, rayon, and/or metal, which have much greater stiffness (i.e., modulus of elasticity) than the adjacent rubber compounds of which the bulk of the tire is made. The difference in elastic modulus of mutually adjacent tire elements may lead to separation when the tire is stressed and deformed during use.

A conventional belt structure comprises a plurality of reinforcement layers in which cords are laid parallel to each other. Due to the unidirectional load carrying capability of each reinforcement layer, an even number of such layers may be stacked up to manage the force transfer in opposite directions. Two such reinforcement layers of steel wires may be used as a belt-package in a typical radial passenger tire, contributing significant weight to the pneumatic tire.

### Summary of the Invention

The invention relates to a pneumatic tire in accordance with claim 1 and to a method in accordance with claim 15.

Dependent claims refer to preferred embodiments of the invention.

A pneumatic tire in accordance with the present invention includes a carcass reinforced by a carcass ply extending from a first bead to a second bead, and a single reinforcement disposed radially outward of the carcass ply in a crown portion of the pneumatic tire, the single reinforcement comprising a continuous cord forming a generally zig zag pattern across the width of the crown portion, the continuous cord being part of a continuous strip with a preferably constant width of from 3.0 mm to 30.0 mm or from 3 mm to 6 mm or from 10 mm to 20 mm such as 15 mm.

According to a preferred aspect of the invention, the continuous cord may have a 2 x 0.295 High Tensile steel cord construction.

According to still another preferred aspect of the invention, the continuous cord may have a 2+2 x 0.22 Ultra Tensile steel cord construction.

According to yet another preferred aspect of the invention, the continuous cord may part of a group of cords of identical construction.

According to yet another preferred aspect of the invention, the continuous cord may comprise carbon fiber, polyester, polyamide, aramid or fused polyester.

### Definitions

"Axial" and "Axially" mean the lines or directions that are parallel to the axis of rotation of the tire.

"Carcass" means the tire structure apart from the belt structure, tread, undertread

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers, with which the plies and belts or the single reinforcement are reinforced.

"Equatorial Plane" means the plane perpendicular to the tire's axis of rotation and passing through the center of its tread; or the plane containing the circumferential centerline of the tread.

"Lateral" means a direction parallel to the axial direction.

"Radial" and "radially" mean directions radially toward or away from the axis of rotation of the tire.

### Brief Description of the Drawings

The structure, operation, and advantages of the invention will become more apparent upon contemplation of the following description taken in conjunction with the accompanying drawings, wherein:
FIG. 1 represents a schematic cross-sectional view of an example tire for use with the present invention;
FIG. 2 represents a schematic detail view of the bead region of the example tire shown in FIG. 1;
FIG. 3 represents a schematic detail view of a crown reinforcement in accordance with the present invention;
FIG. 4 represents a schematic detail view of another crown reinforcement in accordance with the present invention.

### Detailed Description of Example Embodiments of the Present Invention

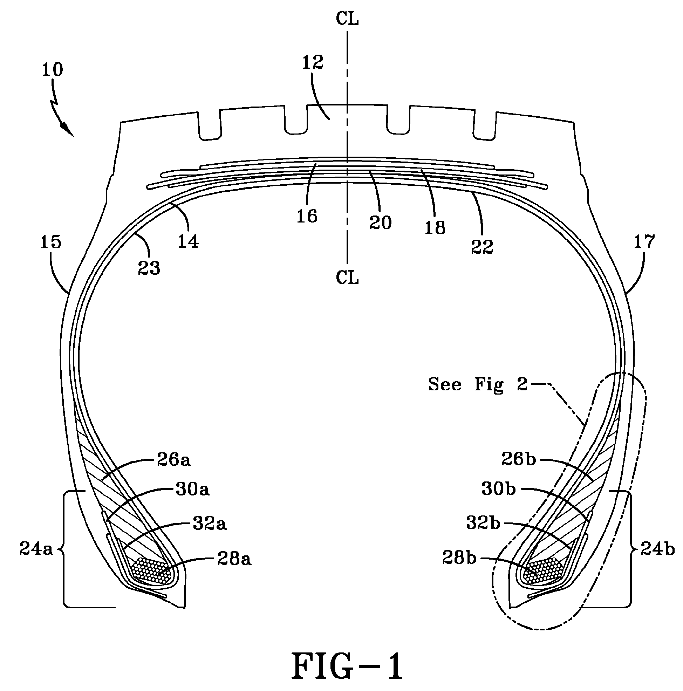

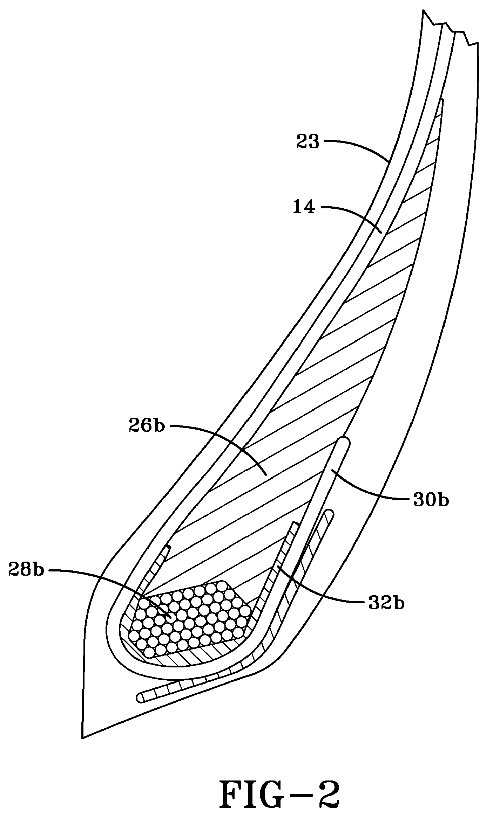

FIGS. 1 and 2 show an example tire 10 for use with reinforcing structures, such as flippers and chippers, in accordance with the present invention. The example tire 10 has a tread 12, an inner liner 23, a belt structure comprising belts 18, 20, an overlay 16, a carcass 22 with a single carcass ply 14, two sidewalls 15,17, and two bead regions 24a, 24b comprising bead filler apexes 26a, 26b and beads 28a, 28b. The example tire 10 is suitable, for example, for mounting on a rim of a passenger vehicle. The carcass ply 14 includes a pair of axially opposite end portions 30a, 30b, each of which is secured to a respective one of the beads 28a, 28b. Each axial end portion 30a or 30b of the carcass ply 14 is turned up and around the respective bead 28a, 28b to a position sufficient to anchor each axial end portion 30a, 30b, as seen in detail in FIG. 2.

The carcass ply 14 may be a rubberized ply having a plurality of substantially parallel carcass reinforcing members made of such material as polyester, rayon, or similar suitable organic polymeric compounds. The carcass ply 14 may engage the axial outer surfaces of two flippers 32a, 32b.

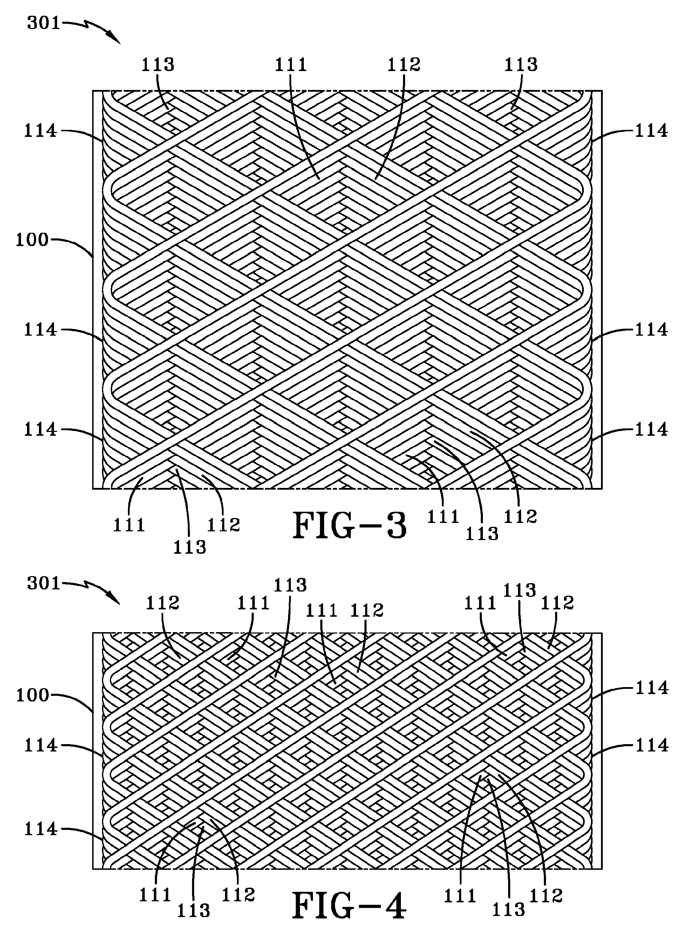

In accordance with the present invention, the overlay 16 and belts 18, 20 are replaced with a single crown reinforcement 301 (FIG. 3 or FIG. 4). The reinforcement 301 is preferably made of a spirally wound continuous strip in a zigzag pattern in two or more layers. The strip has a width between 3.0 mm - 30.0 mm and may be comprised of rubber reinforced with one or more cords. Preferably, the cords have an elongation at break of less than 2.5%.

Conventional strips are reinforced with cords having an elongation to break of greater than 3.5%, greater than 4%, or greater than 4.5%.

Conventional high-speed passenger tires often have a spirally wound overlay reinforcement radially outward of a belt structure. The crown reinforcement 301 may allow removal of the overlay while the pneumatic tire 10 still functions suitably at high speeds. Removing the overlay reduces material cost, tire weight, and flat spotting. The elimination of cut belt edges may also mitigate belt edge separation and provide improved crown durability.

The crown reinforcement 301 is preferably constructed using 1-5 periods of sinusoidal wrap per revolution providing cord/tape angles between 20-40 degrees, or between 25-35 degrees to provide sufficient cornering stiffness. The cords of the crown reinforcement 301 may be steel, PET, polyamide, aramid, hybrid combinations, and/or fused polyester cord, such as that described in US-A-2013/0240106. For example, the cords may have a 2 x 0.295 High Tensile steel and/or a 2+2 x 0.22 Ultra Tensile steel cord construction. Utilizing combinations of different materials may provide advantages particularly for weight and thermal conductivity. For example, the strength of steel reinforcements may be combined with aramid or fiber glass to reduce weight and maintain stiffness and strength. Carbon fiber may be added to increase thermal conductivity of the reinforcement 301 to increase high speed performance by conducting heat away from hot spots.

As stated above, the continuous strip crown reinforcement 301 may replace a conventional structure of two steel belts 18, 20 and an overlay 16, for example, for passenger and radial light truck tires. This could lead to a current cost savings of 1.5 USD to 3 USD per tire, improved durability, and more flexible manufacturing.

The strips may be reinforced with steel, steel textile, and/or hybrid cords and/or monofilaments. This reinforcement 301 may further eliminate belt stock preparation steps and provide increased flexibility choosing reinforcement materials. Elimination of the overlay 16 may reduce tire weight, flat spotting, and cost. Also, elimination of cut belt edges increases high speed performance and durability by removing belt edge crack initiation sites. Since this reinforcement 301 may provide suitable stiffness and strength to a consumer tire, then high speed, plunger, durability, and ride and handling requirements may also be met or exceeded. The reinforcement 301 also allows it to implement alternative methods to provide or improve tack during the zigzag application process.

The endless reinforcement 301 of the present invention preferably has a generally cylindrical form or configuration and may be made from fiber glass, rayon, polyester, nylon, cotton, aramid, metal wire, etc. The dimensions may be varied over a considerable range depending upon the desired parameters of the tire 10.

The reinforcement 301 may be formed from a minimum number of cords so that the number of cut ends will be negligible. In one embodiment, the complete reinforcement 301 may be formed from a single cord which forms the generally zigzag pattern. In this case, the two ends of the single cord may be the only cut ends in the reinforcement.

Under some conditions, it may be desirable to form the reinforcement 301 from several cords simultaneously with each of the cords being in the same zigzag pattern and being positioned similarly to the single cord, but displaced therefrom. This may facilitate the production of the reinforcement 301 in a short period of time. Thus, the reinforcement 301 of the present invention may be an endless strip minimizing splices, which may lead to imbalance and possible premature failure of the tire 10.

The cord in the zigzag pattern may be positioned across the width of the reinforcement 301 from one side to the other at an angle to the edges. The initial angle of the cord may be in the range of 45° to 80° or 50° to 70° as measured from an edge. During expansion of such a reinforcement 301, the angle of the cord may be reduced to an angle in the range of 5° to 35°. With a reinforcement 301 applied on to a carcass 14 after the carcass has been expanded, the angle of the cord may generally be in the range of 10° to 35°, or about the same angle as the final cord angle of an expanded reinforcement. Also, the angle of the cord may change across the width thereof. As a result, the angle of the cord in the portions thereof adjacent to the edges may be greater or less than the angle of the cord in the center portion. Such a construction may be advantageous where different reinforcement expansion characteristics are desired for particular shapes or types of tires.

The reinforcement 301 defines a reversal of the cord at the edges. Upon this reversal, the succeeding length of cord may be positioned in the zigzag pattern at approximately the same angle with respect to one edge as the previous length of cord prior to the reversal with respect to the opposite edge. This may provide a symmetrical cord position in the final construction and minimize imbalance in the tire 10.

The edges of the reinforcement 301 may be staggered with respect to other reversal points. Thus, the point of reversal for a given length of cord may be closer to the center than an average, or farther away, as desired. Such staggering of the reversal points may provide a reinforcement 301 with edges somewhat thinner than the main body of the reinforcement.

Lengths of cord between reversals in the reinforcement 301 are interleaved with lengths disposed at an opposite angle. This interleaving of the cord is along a line or zone substantially parallel to, and intermediate, the edges as described above. This interleaving may result in at least two portions of a length of the cord being disposed on the outside of the reinforcement 301 and at least two portions thereof being disposed on the inside with alternate portions on the outside and the inside along the length. A single length may have between 2 and 250 portions disposed on the outside of the reinforcement 301 with a like number of portions being disposed on the inside thereof. The degree or extent of interleaving along a particular length determines the number of interleaving lines or zones intermediate the edges.

As the number of portions increases, the lines or zones of interleaving become less readily visible due to the overall black color of the rubber coated cord and/or the interleaving pattern. This may also occur when several cords are employed together in the formation of the reinforcement.

The cord may be associated with a green or unvulcanized rubber layer or belt. The reinforcement 301 may be produced by forming the cord in a zigzag pattern over the surface of such a rubber layer or belt. Also, a rubber layer may be placed over the outer surface, instead of, or together with, a second rubber layer on the inside. Rubber shoulder portions may be disposed adjacent the edges of the reinforcement 301 either with the cord(s) alone or in combination with one or more rubber layers. The shoulder portions may assist in the positioning of the reinforcement 301 with respect to the carcass 14 so that the edges will be properly disposed in the finished tire 10 in relation to the center portion. The shoulder portions minimize the possibility of air entrapment during curing.

While the above description has been directed primarily to an endless reinforcement breaker for pneumatic tires it will be apparent that the present invention may be utilized to provide reinforcements with various layered constructions with the same or different dimensions or constructions in individual layers. Also, the present invention is useful for the production of other cord components of a tire, for example, for the carcass itself or for a unitized breaker/carcass assembly. The reinforcement can be wound over a carcass or applied thereto in flat band form and expanded, e.g., to produce a belted bias-ply tire or wound over or applied to an expanded carcass such as in the production of a radial-ply tire. Furthermore, the reinforcement can be used with a tire from which the tread has been removed, new tread stock applied and vulcanized to form a retread tire.

In accordance with the present invention, portions of endless reinforcements 301 are shown in FIGS. 3 and 4. The reinforcement 301 illustrated in FIG. 3 may be similar to the one shown in FIG. 4 except that the number of interleaving lines are increased from 3, 4 or 5 for instance to 7 to 15 such as 13 for instance. The angle of the cord(s) in each case may be approximately 30° and the width may be approximately 10.0 mm. However, it will be seen that the number of interleaving lines change from one reinforcement to another. As shown in the Figures, a cord may be positioned on a green rubber belt 100 with cord length 111 interleaved with cord lengths 112 to form an interleaving line or zone 113. Reversal points 114 at the edges of the reinforcement 301 can be seen from the Figures.

As stated above, a single reinforcement 301 in accordance with the present invention produces reduced weight with comparable performance in a tire 10. This single reinforcement 301 thus lightens the tire 10 with essentially no performance tradeoff, even though the complexities of the structure and behavior of the pneumatic tire are such that no complete and satisfactory theory has been propounded. Only through extensive experimentation has the single reinforcement 301 of the present invention been revealed as an excellent, unexpected, and unpredictable option for a complete belt structure.

## Claims

1. A pneumatic tire comprising a carcass (22) reinforced by one or more carcass plies (14) extending from a first bead to a second bead (20a, 20b) and a single reinforcement (301) disposed radially outward of the one or more carcass plies (14) in a crown portion of the pneumatic tire (10), the single reinforcement (301) comprising a continuous cord forming a generally zigzag pattern across the width of the crown portion, the continuous cord being part of a continuous strip with a width in a range of from 3.0 mm to 30.0 mm.

2. The tire in accordance with claim 1 wherein width of the strip is constant or at least substantially constant.

3. The tire in accordance with claim 1 or 2 wherein width of the strip is in a range of from 3 to 6 mm.

4. The tire in accordance with claim 1 or 2 wherein width of the strip is in a range of from 10 to 20 mm.

5. The tire in accordance with at least one of the previous claims wherein the single reinforcement is a circumferentially endless reinforcement (301).

6. The tire in accordance with at least one of the previous claims wherein the single reinforcement (301) comprises first strip segments interleaved with second strip segments in such a way that the number interleaving lines of first strip segments and second strip segments from one axial edge of the single reinforcement (301) to other axial edge of the single reinforcement (301) across the axial width of the single reinforcement (301) is in a range of from 3 to 15.

7. The tire in accordance with at least one of the previous claims wherein the single reinforcement (301) comprises first strip segments interleaved with second strip segments in such a way that the number crossing of first strip segments and second strip segments from one axial edge of the single reinforcement (301) to other axial edge of the single reinforcement (301) across the axial width of the single reinforcement (301) is in a range of from 3 to 15.

8. The tire in accordance with at least one of the previous claims wherein the continuous cord has a 2 x 0.295 cord construction, preferably a 2 x 0.295 High Tensile steel cord construction, or a 2+2 x 0.22 cord construction, preferably a 2+2 x 0.22 Ultra Tensile steel cord construction.

9. The tire in accordance with at least one of the previous claims wherein the continuous cord is part of a group of cords of identical construction.

10. The tire in accordance with at least one of the previous claims wherein the continuous cord comprises at least one or carbon fiber, PET, polyester, fused polyester, polyamide, aramid or a combination of two or more of these materials.

11. The tire in accordance with at least one of the previous claims wherein the continuous cord comprises steel and at least one or carbon fiber, polyester, fused polyester, polyamide, nylon, cotton, metal wire, rayon, fiber glass, aramid or a combination of two or more of these materials together with steel, and/or wherein the continuous cord is a hybrid cord.

12. The tire in accordance with at least one of the previous claims wherein the single reinforcement (301) is constructed using of from 1 to 5 periods of sinusoidal wrap per revolution and/or wherein the single reinforcement (301) has cord angles in a range of from 10-40 degrees or from 10 to 35 degrees or from 25 to 35 degrees with respect to the equatorial plane (CL) when measured at the location of the equatorial plane (CL).

13. The tire in accordance with at least one of the previous claims wherein the single reinforcement (301) is formed from a single cord forming the generally zigzag pattern across the width of the crown portion.

14. The tire in accordance with at least one of the previous claims wherein the single reinforcement (301) is formed from a plurality of parallel apart cords forming the generally zigzag pattern across the width of the crown portion.

15. A method for designing a pneumatic tire, the method comprising replacing a first belt, a second belt and an overlay with a single reinforcement (301) comprising a continuous cord forming a generally zigzag pattern across the width of the crown portion of the tire (10), the continuous cord being part of a continuous strip with a width in a range of from 3.0 mm to 30.0 mm.
